Europäisches Patentamt

European Patent Office

Office européen des brevets

(19)

(11) Veröffentlichungsnummer: **0 000 522**

**B1**

(12) # EUROPÄISCHE PATENTSCHRIFT

(21) Anmeldenummer: **78100400.7**

(22) Anmeldetag: **14.07.78**

(51) Int. Cl.³: **G 03 B 41/18**

(54) **Kassette mit einer Filmandrückplatte für blattförmiges Filmmaterial, insbesondere Röntgenfilm**

(30) Priorität: **22.07.77 GB 30849/77**

(43) Veröffentlichungstag der Anmeldung:
**07.02.79 Patentblatt 79/03**

(45) Bekanntmachung des Hinweises auf die Patenterteilung:
**07.01.81 Patentblatt 81/01**

(84) Benannte Vertragsstaaten:
**BE CH DE FR GB NL**

(56) Entgegenhaltungen:
**DE - B - 1 218 873**
**US - A - 3 652 853**
**US - A - 3 930 165**

(73) Patentinhaber: **CIBA—GEIGY AG**
**Patentabteilung Postfach**
**CH - 4002 Basel (CH)**

(72) Erfinder: **Turner, George Frederick Albert**
**"Monks Acres"**
**Woolmongers Lane, Blackmore**
**Ingatestone, Essex CM4 0JX (GB)**

Courier Press, Leamington Spa, England.

Kassette mit einer Filmandrückplatte für blattförmiges Filmmaterial, insbesondere Röntgenfilm

Die Erfindung betrifft eine Kassette mit einer Filmandrückplatte für blattförmiges Filmmaterial, insbesondere Röntgenfilm, mit einem Rahmen mit einer unteren Platte und einer oberen Platte, zwischen denen sich die Andrückplatte befindet, die bei geschlossener Kassette federnd an der unteren Platte anliegt und bei offener Kassette von der unteren Platte abgehoben ist, mit einer schlitzförmigen Oeffnung an einem Ende des Rahmens zur Eingabe oder Entnahme eines Films, mit zumindest einem Anhebeansatz entlang jeder Längskante der Andrückplatte, mit zwei Schubstangen, die auf den Längsseiten des Rahmens angeordnet und in ihrer Längsrichtung zwischen einer ersten Stellung, bei der die Kassette geschlossen ist, und einer zweiten Stellung, bei der die Kassette geöffnet ist, bewegbar sind.

Derartige Kassetten dienen zusammen mit entsprechend ausgebildeten Filmlade- und Filmentladevorrichtungen sowie Filmverarbeitungsvorrichtungen zur Verarbeitung des Films bei Tageslicht.

Bei einer aus der GB-Patentschrift 1 361 014 bekannten Kassette dieser Art sind zum Abheben der Andrückplatte Rampenflächen auf den Schubstangen vorgesehen. Diese Konstruktion ist zwar sehr einfach, hat jedoch verschiedene Nachteile. Insbesondere ist infolge der Gleitreibung die zum Oeffnen der Kassette erforderliche Kraft relativ gross.

Desgleichen sind zur Rückstellung relativ grosse Federkräfte bzw. starke Federn erforderlich. Ferner ist die bekannte Kassette trotz des einfachen Aufbaues nicht einfach montierund demontierbar. Dieser Mangel ist besonders bei Röntgenfilmkassetten nachteilig, da bei diesen die auf der Andrückplatte sitzenden Verstärkungsschirme zeitweise ausgewechselt werden müssen.

Bei der erfindungsgemässen Filmkassette werden diese Nachteile dadurch vermieden, dass jeder Schubstange zumindest ein durch diese bewegbares rundes Teil zugeordnet ist, das bei einem Anhebeansatz angeordnet ist und sich in der ersten Stellung der Schubstange auf dem einen Winkelschenkel eines abgewinkelten Teils befindet, welcher Winkelschenkel unterhalb von mindestens einem Teil des Anhebeansatzes liegt, so dass bei der Bewegung der Schubstange aus der ersten in die zweite Stellung das runde Teil von der Schubstange auf dem abgewinkelten Teil bis auf dessen anderen Winkelschenkel bewegt wird, wodurch der anfangs mit der Andrückplatte parallele eine Winkelschenkel nach oben verschwenkt wird, so dass der Anhebeansatz und damit die Andrückplatte zusammen mit einer lichtabschirmenden Einrichtung, welche bei geschlossener Kassette das Eindringen von Licht durch die Oeffnung in die Kassette verhindert, zum Oeffnen der Kassette gehoben wird.

Eine bevorzugte Ausführungsform der erfindungsgemässen Filmkassette ist dadurch gekennzeichnet, dass die Andrückplatte an jeder Seitenkante mehrere Anhebeansätze aufweist, bei welchen je ein rundes Teil und ein abgewinkeltes Teil vorhanden ist. Hierdurch wird ein besonders gleichmässiges Anheben der Andrückplatte erreicht.

Nachfolgend wird die Erfindung anhand von bevorzugten Ausführungsformen unter Bezugnahme auf die anliegenden Zeichnungen im einzelnen beschrieben. Es zeigen:

Fig. 1 eine Seitenansicht einer Filmkassette gemäß der Erfindung;

Fig. 2 eine Draufsicht auf die gleiche Filmkassette, wobei die vordere bzw. obere Platte zum Teil entfernt ist;

Fig 3 eine in Einzelteile aufgelöste Teilansicht der gleichen Kassette.

Fig. 4.1 bis 4.3 schematische Schnittansichten von drei Stellungen einer in Fig. 2 und 3 wiedergegebenen Rolle, wenn sie mittels einer Schubstange bewegt wird;

Fig. 5 eine schematische Teilansicht eines Teils der Kassette, wobei eine weitere Ausführungsform einer Rolle mit nur einem ihr zugeordneten, abgewinkelten Teil dargestellt ist; und

Fig. 6.1 und 6.2 die Lage der Rolle in den offenen und geschlossenen Stellungen der Kassette der Fig. 5.

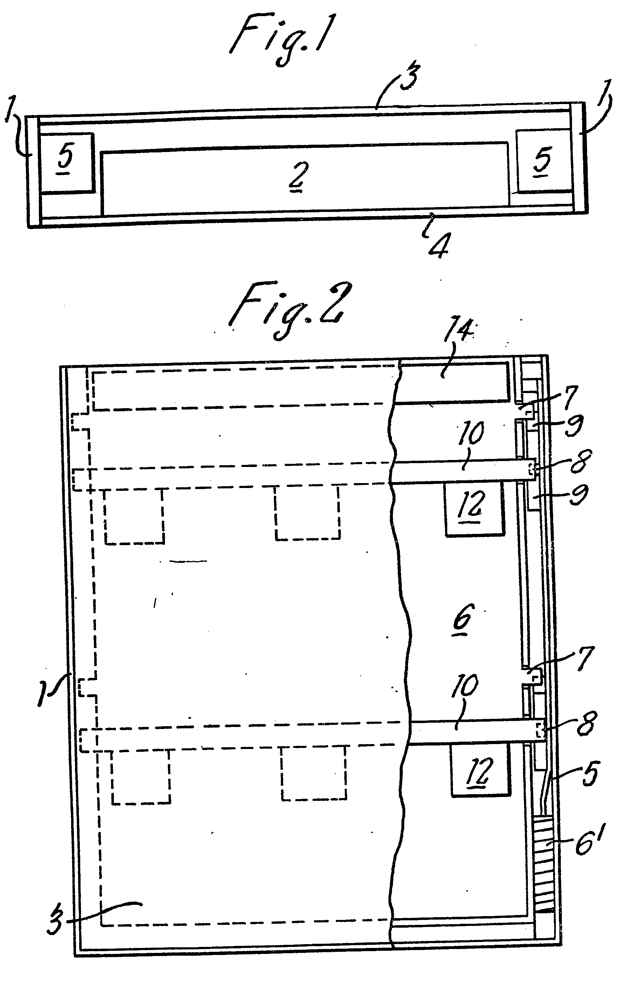

Bezüglich der Offenbarung der Erfindung wird wegen deren großen Klarheit und Anschaulichkeit ausdrücklich auf die Zeichnungen bezug genommen. In Fig. 1 weist eine Kassette einen vierseitigen Rahmen 1 auf, bei welchem an einem Ende eine schlitzförmige Öffnung 2 vorgesehen ist. Eine vordere bzw. obere Platte 3 und eine hintere bzw. untere Platte 4 vervollständigen die flache sechsseitige Kassette. In Fig. 1 sind auch die Enden von zwei Schubstangen 5 dargestellt.

In Fig. 2 bis 4 sind die gleichen Teile mit denselben Bezugszeichen bezeichnet. In Fig. 2 sind alle vier Seiten des Rahmens 1 dargestellt. Jedoch ist die vordere bzw. obere Platte 3 teilweise entfernt, um Einzelheiten einer Schubstange 5 zu zeigen. Am Ende jeder Schubstange 5 ist eine Feder 6 vorgesehen (wobei in dieser Figur jedoch nur eine Stange und eine Feder dargestellt sind). Unter der vorderen bzw. oberen Platte 3 ist eine Andrückplatte 6 gehaltert. An dieser Andrückplatte 6 sind zum An- oder Hochheben eine Anzahl Ansätze 7 angebracht.

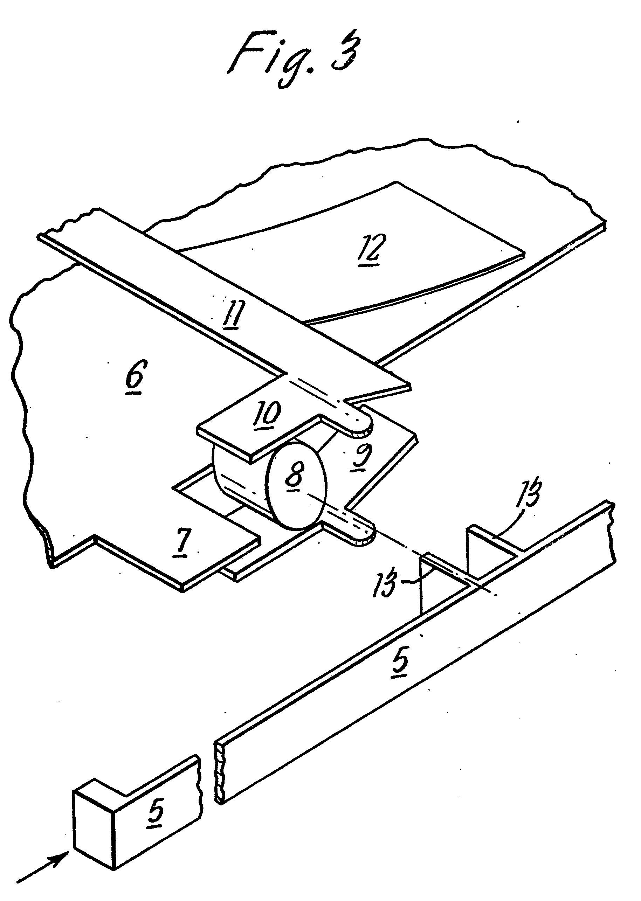

Der Schubstange 5 sind zwei Rollen 8 zugeordnet. Jede Rolle 8 sitzt auf einem unteren abgewinkelten Teil 9 (von welchem in Fig. 2 jedes Ende mit 9 bezeichnet ist). Über jeder Rolle befindet sich ein oberes abgewinkeltes Teil 10. Diese Anordnung ist in einer in Einzelteile aufgelösten, perspektivischen Darstellung in Fig. 3 wiedergegeben.

Jeweils zwei obere abgewinkelte Teile 10 sind durch ein Verbindungs- oder Halterungsteil 11 miteinander verbunden. An jedem Halterungsteil 11 sind eine Anzahl Blatt- oder Flachfedern 12 angebracht. Ferner ist eine lichtabschirmende Einrichtung 14 vorgesehen, welche das Eindringen von Licht in die Kassette verhindert, wenn die Kassette geschlossen ist.

In Fig. 3 ist die Lage der Rolle 8 zwischen dem oberen und dem unteren abgewinkelten Teil 10 bzw. 9 dargestellt. In Fig. 3 ist die an dem Halterungsteil 11 angebrachte Blattfeder 12 so dargestellt, daß sie nach unten auf die Andrückplatte 6 drückt. Die Rolle 8 ist neben einem Anhebeansatz 7 dargestellt, welcher an der Andrückplatte 6 angebracht ist.

Die Schubstange 5 ist zurückgezogen aus ihrer Lage in der Kassette dargestellt. An der Schubstange 5 sind zwei Ansätze oder Vorsprünge 13 angebracht, mittels welchen eine Rolle eingestellt und in eine entsprechende Lage bringbar ist. Die Rolle 8 paßt genau zwischen die Ansätze 13, und wenn die Schubstange 5 bewegt wird, wird auch die Rolle zusammen mit der Schubstange bewegt.

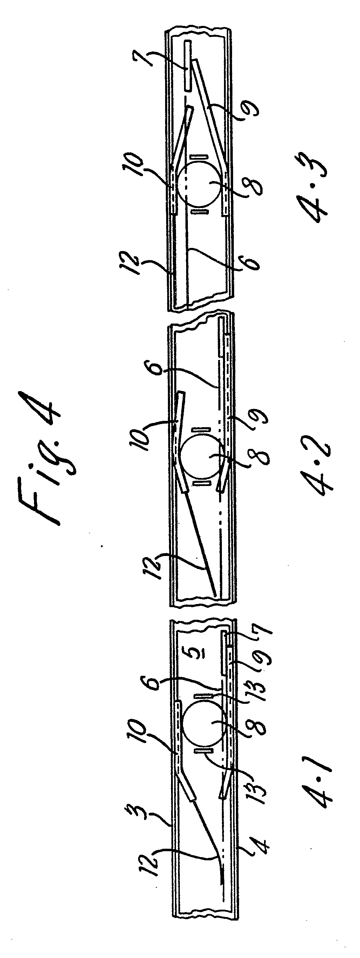

In Fig. 4.1 ist die Kassette in der geschlossenen Stellung dargestellt. Hierbei sitzt die Rolle 8, die zwischen den an der Schubstange 5 angebrachten Ansätzen 13 angeordnet ist, auf dem längeren, ebenen Teil des unteren abgewinkelten Teils 9. Der lange flache Teil des oberen abgewinkelten Teils 10 liegt ebenfalls auf der Rolle. In dieser Lage drücken die an dem Halterungsteil 11 angebrachten Blattfedern 12 die Andrückplatte 6 nach unten, welche durch eine gestrichelte Linie angedeutet ist. Der Anhebeansatz 7 ist über dem flachen Teil des abgewinkelten Teils 9 festgelegt und angeordnet. Dies entspricht der ersten Stellung der Schubstange.

In Fig. 4.2 ist die Rolle 8 mittels der Schubstange 5 entlang der abgewinkelten Teile 9 und 10 bewegt worden. Hierdurch ist dann das obere, abgewinkelte Teil 10 etwas gedreht und geschwenkt worden, so daß die Blattfedern 12 nicht mehr länger nach unten auf die Andrückplatte 6 drücken.

In Fig. 4.3 ist die Rolle 8 mittels der Schubstange 5 gerade entlang der abgewinkelten Teile 9 und 10 bewegt worden. Hierdurch ist dann der anfangs ebene Teil des unteren abgewinkelten Teils 9 nach oben verschwenkt worden. Hierdurch ist dann der Ansatz 7 angehoben worden, welcher seinerseits die Andrückplatte 6 anhebt, an welcher er angebracht ist. Hierbei ist die Endstellung der Andrückplatte 6 wiedergegeben, die bezüglich der hinteren bzw. unteren Platte 4 nach oben angehoben ist. Die Schubstange 5 befindet sich nunmehr in ihrer zweiten Stellung, und die Kassette ist offen.

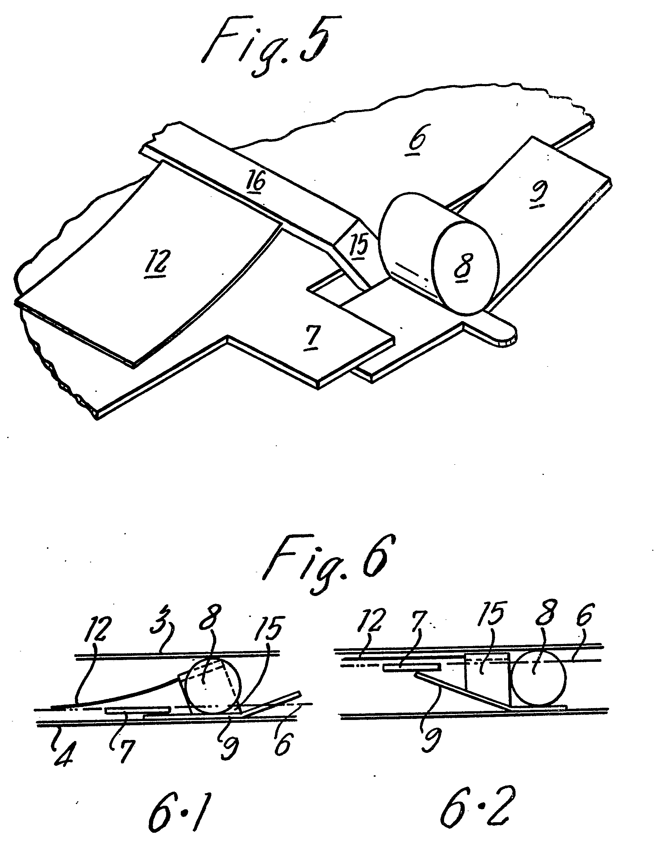

In Fig. 5 sind mit den Bezugszeichen 6 bis 9 und 12 dieselben Teile wie in den vorhergehenden Figuren bezeichnet. In dieser Ausführungsform, welche in derselben Ansicht wie Fig. 3 wiedergegeben ist, ist an dem unteren abgewinkelten Teil 9 ein Verbindungsstück 15 angebracht, welches abgebogen ist, um ein Blattfeder-Halterungsteil 16 zu bilden. Dieses Halterungsteil ist auf der anderen (nicht dargestellten) Seite der Kassette mit einem ähnlichen Verbindungsstück verbunden.

In Fig. 6 sind zwei Stellungen der Rolle 8 bezüglich des unteren abgewinkelten Teils 9 wiedergegeben. In Fig. 6.1 ist die Kassette geschlossen. Die Rolle 8 sitzt auf dem langen ebenen Teil des abgewinkelten Teils 9. In dieser Stellung drückt die Blattfeder 12 gegen die Andrückplatte 6. In Fig. 6.2 befindet sich die Kassette in der offenen Stellung. In diesem Fall ist die Rolle 8 bewegt worden, so daß der längere Teil des abgewinkelten Teils 9 nach oben geschwenkt worden ist, wodurch der Ansatz 7 und die Andrückplatte 6 angehoben sind, an welcher der Ansatz 7 angebracht ist. Gleichzeitig ist die Blattfeder 12 angehoben worden, so daß sie nicht mehr gegen die Andrückplatte 6 drückt. Die Endstellung der Andrückplatte 6 ist somit in Fig. 6.2 wiedergegeben.

Die vorderen bzw. oberen und die hinteren bzw. unteren Platten 3 und 4 sind feststehende, unbewegliche Platten; das bedeutet, daß sie während der Entnahme oder während des Ladens der Kassette nicht bewegt oder angehoben werden. Es ist jedoch möglich, beide Platten von dem Rahmen 1 zu entfernen, um die Kassette zu zerlegen und auseinanderzunehmen.

Während des Betriebs befindet sich die erfindungsgemäße Filmkassette normalerweise in geschlossenem Zustand, in welchem die Andrückplatte 6 durch die Blattfedern 7 gegen die hintere bzw. untere Platte 4 gedrückt wird. Um die Kassette mit einem Film zu laden, wird sie dann in eine Öffnung in einer Filmausgabeeinrichtung eingesetzt, wie beispielsweise in der britische Patentanmeldung 12 180/77 vom 23.3.1977 oder in der GB - PS 1 361 014 beschrieben ist. In einer derartigen Ausgabeeinrichtung ist das Ende der Kassette lichtdicht in die Ausgabeöffnung eingebracht. Zwei Stangen drücken dann nach unten auf die Schubstangen 5, so daß die Kassette geöffnet wird. Der Film wird dann in die Kassette eingelegt. Die Stangen, welche auf die Schubstangen 5 drücken, werden dann zurückgezogen, und die Kassette wird dadurch geschlossen. Sie kann dann aus der Ausgabeeinrichtung herausgenommen werden. Bei anderen Ausgabeeinrichtungen wird eine Kassette beim Einschieben in die lichtdichte Öffnung geöffnet und beim Herausnehmen aus der Öffnung wird die Kassette dann wieder geschlossen. Der Film in der Kassette kann dann in üblicher Weise belichtet werden. Nach dem Belichten wird dann die Kassette umgedreht, sodaß der Schlitz nach unten zeigt. Die Kassette wird dann in einen Filmspeicher oder in eine Filmverarbeitungseinrichtung eingebracht. Die Öffnung, in welche sie eingeführt wird, ist ebenfalls lichtdicht. Einrichtungen kommen dann mit den Schubstangen 5 in Eingriff, wodurch die Kassette geöffnet wird und der Film aufgrund der Schwerkraft in einen Aufnahmebehälter der Speicher -oder Verarbeitungseinrichtung fällt. Die Kassette wird dann geschlossen, wenn sie aus dieser Einrichtung herausgenommen wird. Sowohl die Filmausgabeeinrichtung als auch die Filmspeicher- oder Verarbeitungseinrichtung können sich in einem Filmbelichtungsraum mit Tageslicht befinden.

## Patentansprüche

1. Filmkassette mit einem Rahmen mit einer unteren Platte und einer oberen Platte, zwischen denen sich die Andrückplatte befindet, die bei geschlossener Kassette federnd an der unteren Platte anliegt un bei offener Kassette von der unteren Platte abgehoben ist, mit einer schlitzförmigen Oeffnung an einem Ende des Rahmens zur Eingabe oder Entnahme eines Films, mit zumindest einem Anhebeansatz entlang jeder Längskante der Andrückplatte, mit zwei Schubstangen, die auf den Längsseiten des Rahmens angeordnet und in ihrer Längsrichtung zwischen einer ersten Stellung, bei der die Kassette geschlossen ist, und einer zweiten Stellung, bei der die Kassette geöffnet ist, bewegbar sind, dadurch gekennzeichnet, dass jeder Schubstange (5) zumindest ein durch diese bewegbares rundes Teil (8) zugeordnet ist, das bei einem Anhebeansatz (7) angeordnet ist und sich in der ersten Stellung der Schubstange auf dem einen Winkelschenkel eines abgewinkelten Teils (9) befindet, welcher Winkelschenkel unterhalb von mindestens einem Teil des Anhebeansatzes liegt, so dass bei der Bewegung der Schubstange aus der ersten in die zweite Stellung das runde Teil von der Schubstange auf dem abgewinkelten Teil bis auf dessen anderen Winkelschenkel bewegt wird, wodurch der anfangs mit der Andrückplatte parallele eine Winkelschenkel nach oben verschwenkt wird, so dass der Anhebeansatz und damit die Andrückplatte zusammen mit einer lichtabschirmenden Einrichtung (14), welche bei geschlossener Kassette das Eindringen von Licht durch die Oeffnung (2) in die Kassette verhindert, zum Oeffnen der Kassette gehoben wird.

2. Filmkassette nach Anspruch 1, dadurch gekennzeichnet, daß die Andrückplatte (6) an jeder Seitenkante mehrere Anhebeansätze (7) aufweist, bei welchenie ein rundes Teil (8) und ein abgewinkeltes Teil (9) vorgesehen ist.

3. Filmkassette nach Anspruch 2, dadurch gekennzeichnet, daß jedem Ansatz (7) auf einer Seitenkante der Andrückplatte (6) ein gleicher Ansatz an der anderen Seitenkante der Andrückplatte (6) gegenüberliegt.

4. Filmkassette nach Anspruch 3, dadurch gekennzeichnet, daß jedem ans einem runden Teil (8) und einem abgewinkelten Teil bestehenden Teilepaar (9) ein gleiches Teilepaar auf der anderen Seite der Kassette gegenüberliegt, wodurch eine Reihe von runden Teilen (8) und abgewinkelten Teilen (9) entlang jeder Seite der Kassette ausgebildet ist.

5. Filmkassette nach einem der Ansprüche 1 bis 4, dadurch gekennzeichnet, daß das runde Teil (8) eine Rolle, eine Kugel oder ein Rad ist.

6. Filmkassette nach einem der Ansprüche 1 bis 5, dadurch gekennzeichnet, daß die Andrückplatte (6) durch eine Anzahl Blattfedern (12) federnd gegen die hintere bzw. untere Platte (4) gedrückt ist.

7. Filmkassette nach einem der Ansprüche 1 bis 6, dadurch gekennzeichnet, daß ein zweites abgewinkeltes Teil (10) über dem runden Teil (8) gehaltert ist, so daß es durch den runden Teil geschwenkt werden kann.

8. Filmkassette nach Anspruch 7, dadurch gekennzeichnet, daß das zweite abgewinkelte Teil (10) durch ein Halterungs- und Verbindungsteil (11), an welchem Blattfedern (12) angebracht sind, mit einem entsprechenden, zweiten abgewinkelten Teil (10) auf der anderen Seite der Kassette verbunden ist.

9. Filmkassette nach einem der Ansprüche 1 bis 8, dadurch gekennzeichnet, daß ein Röntgen-Verstärkungsschirm auf der Innenseite der rückwärtigen bzw. unteren Platte und ein Röntgen-Verstärkungsschirm auf der Unterseite der Andrückplatte (6) angebracht ist.

10. Filmkassete nach einem der Ansprüche 1 bis 9, dadurch gekennzeichnet, daß die zwei Schubstangen (5) federbelastet (6) sind.

## Claims

1. A film cassette comprising a frame having a bottom plate and an upper plate and located therebetween a pressure plate for resiliently bearing against said bottom plate when the cassette is in the closed position but raised therefrom when the cassette is in the open position, there being provided at one end of the frame a slot aperture for loading or unloading a film, said pressure plate having at least one lifting tab connected thereto along each side thereof, with two push rods being located one at each side of the frame for linear movement between a first position in which the cassette is closed and a second position in which the cassette is open, characterised in that there is assigned to each push rod (5) at least one round member (8) which can be moved thereby, said round member being located at a lifting tab (7) and resting in the first position of the push rod on one angle limb of a bellcrank member (9), said angle limb being positioned below at least one part of the lifting tab, such that the movement of the push rod from the first position into the second position causes the round member resting on the bellcrank member to move to the other angle limb thereof, whereby the angle limb initially parallel to the pressure plate is pivoted upwards, such that the lifting tab, and with it the pressure plate together with a light-shielding means (14) which prevents light from entering the cassette through the aperture (2) when the cassette is closed, is raised to open the cassette.

2. A film cassette according to claim 1, characterised in that the pressure plate (6) has on each side several lifting tabs (7) for each of which there is provided one round member (8) and one bellcrank member (9).

3. A film cassette according to claim 2, characterised in that each lifting tab (7) on one side of the pressure plate (6) has an identical tab directly opposite thereto on the other side of the pressure plate.

4. A film cassette according to claim 3, characterised in that each pair of members consisting of a round member (8) and a bellcrank member (9) has a like pair of members directly opposite thereto on the other side of the cassette, forming a series of pairs of round members and bellcrank members along side of the cassette.

5. A film cassette according to any one of claims 1 to 4, characterised in that the round member (8) is a roller, ball or wheel.

6. A film cassette according to any one of claims 1 to 5, characterised in that the pressure plate (6) is resiliently pressed against the back or lower plate (4) by a number of leaf springs (12).

7. A film cassette according to any one of claims 1 to 6, characterised in that a second bellcrank member (10) is mounted above the round member (8), such that the round member can cause it to pivot.

8. A film cassette according to claim 7, characterised in that the second bellcrank member (10) is connected to an equivalent second bellcrank member (10) on the other side of the cassette by means of a holding and connecting member (11) to which there are attached leaf springs.

9. A film cassette according to any one of claims 1 to 8, characterised in that an X-ray intensifying screen is mounted on the inside of the back or lower plate, and an X-ray intensifying screen is mounted on the underside of the pressure plate (6).

10. A film cassette according to any one of claims 1 to 9, characterised in that the two push rods (5) are spring loaded (6).

**Revendications**

1. Cassette pour film comportant un cadre muni d'une plaque inférieure et d'une plaque supérieure entre lesquelles se trouve la plaque de serrage qui, la cassette étant fermée, vient s'appliquer élastiquement sur la plaque inférieure et, la cassette étant ouverte, est soulevée de la plaque inférieure, d'une ouverture en forme de fente à une extrémité du cadre pour l'introduction ou l'extraction d'un film, d'au moins un appendice de soulèvement le long de chaque arête longitudinale de la plaque de serrage, de deux tiges de poussée qui sont placées sur les côtés longitudinaux du cadre et peuvent être déplacées dans leur sens longitudinal entre une première position lorsque la cassette est fermée, et une seconde position lorsque la cassette est ouverte, caractérisée par le fait qu'à chaque tige de poussée (5) est associée au moins une pièce ronde (8) qui peut être déplacée par celle-ci et disposée près d'un appendice de soulèvement (7) et qui, dans la première position de la tige de poussée, se trouve sur une des branches d'une pièce coudée (9), laquelle branche se trouve en-dessous d'au moins une partie de l'appendice de soulèvement, si bien que lors déplacement de la tige de poussée de la première à la seconde position, la pièce ronde est déplacée par la tige de poussée sur la partie coudée jusqu'à son autre branche de sorte que l'une des branches initialement parallèles à la plaque de serrage est pivotée vers le haut de façon que soient soulevés, pour l'ouverture de la cassette, l'appendice de soulèvement et par conséquent la plaque de serrage en même temps qu'un dispositif (14) faisant écran à la lumière, lequel empêche la pénétration de la lumière à travers l'ouverture (2) de la cassette lorsque la cassette est fermée.

2. Cassette pour film selon la revendication 1, caractérisée par le fait que la plaque de serrage (6) comporte sur chaque arête latérale plusieurs appendices de soulèvement (7) pour chacun desquels on prévoit une pièce ronde (8) et une pièce coudée (9).

3. Cassette pour film selon la revendication 2, caractérisée par le fait qu'en face de chaque appendice de soulèvement (7) sur une arête latérale de la plaque de serrage (6), est disposé un appendice de soulèvement identique et sur l'autre arête latérale de la plaque de serrage (6).

4. Cassette pour film selon la revendication 3, caractérisée par le fait qu'en face de chaque paire constituée par une pièce ronde (8) et une pièce coudée (9) est disposée une paire identique placée sur l'autre côté de la cassette, de façon à réaliser une rangée de pièces rondes (8) et de pièces coudées (9) le long de chaque côté de la cassette.

5. Cassette pour film selon l'une des revendications 1 à 4, caractérisée par le fait que la pièce ronde (8) est un rouleau, une bille ou une roue.

6. Cassette pour film selon l'une des revendications 1 à 5, caractérisée par le fait que la plaque de serrage (6) est appuyée élastiquement contre la plaque arrière ou la plaque inférieure (4) par une pluralité de lames élastiques (12).

7. Cassette pour film selon l'une des revendications 1 à 6, caractérisée par le fait qu'une seconde pièce coudée (10) est maintenue au-dessus de la pièce ronde (8) de façon à pouvoir être pivotée par ladite pièce ronde.

8. Cassette pour film selon la revendication 7, caractérisée par le fait que la seconde pièce coudée (10) est raccordée à une seconde pièce coudée correspondante (10) placée sur l'autre côté de la cassette par un élément de maintien et de raccordement (11) muni de lames de ressort (12).

9. Cassette pour film selon l'une des revendications 1 à 8, caractérisée par le fait qu'un écran d'amplification de radiographie est appliqué sur la face interne de la plaque arrière ou inférieure et qu'un écran d'amplification radiographique est appliqué sur la face inférieure de la plaque de serrage (6).

10. Cassette pour film selon l'une des revendications 1 à 9, caractérisée par le fait que les deux tiges de poussée (5) sont maintenues élastiquement (6).

*Fig.1*

*Fig.2*

# Fig. 3

# Fig. 4

4·1

4·2

4·3

# Fig. 5

# Fig. 6

6·1

6·2

4